# EUROPÄISCHE PATENTSCHRIFT

(11) **EP 1 446 311 B1**
(45) Veröffentlichungstag und Bekanntmachung des Hinweises auf die Patenterteilung: **08.03.2006**
(21) Anmeldenummer: 02779114.4
(22) Anmeldetag: 20.09.2002
(51) Int. Cl.: B60T 8/00

(54) **REIFENSENSORIK ZUR KONTINUIERLICHEN MESSUNG DER ÜBERTRAGENENN KRAFT UND DES REIBWERTPOTENTIALS**
TIRE SENSOR SYSTEM FOR CONTINUOUSLY MEASURING THE TRANSMITTED FORCE AND THE COEFFICIENT OF FRICTION POTENTIAL
SYSTEME DE DETECTION PERMETTANT DE MESURER EN CONTINU LA FORCE TRANSMISE ET LE POTENTIEL DU COEFFICIENT DE FROTTEMENT

(30) Priorität: 13.11.2001 DE 10155672
(43) Veröffentlichungstag der Anmeldung: 18.08.2004
(73) Patentinhaber: ROBERT BOSCH GMBH, 70442 Stuttgart (DE)
(72) Erfinder: LIEBEMANN, Edwin, 71229 Leonberg (DE); ARNDT, Dietmar, 74343 Kleinsachsenheim (DE)
(86) Internationale Anmeldenummer: PCT/DE2002/003550
(87) Internationale Veröffentlichungsnummer: WO 2003/042018

(56) Entgegenhaltungen:
- EP-A- 0 937 615
- WO-A-93/25400
- FR-A- 2 803 248

## Beschreibung

Die Erfindung betrifft eine Reifensensorik zur kontinuierlichen Messung der übertragenen Kraft und des Reibwertpotentials µ, die aus einer Vielzahl von an der äußeren Umfangsfläche des Reifens angeordneten Sensoren besteht, durch die Messgrößen abgegriffen und als Signale über eine Antennenanordnung einer Auswerteeinheit zuführbar sind.

### Stand der Technik

Der Reifen von Fahrzeugen stellt ein elastisches Bindeglied zwischen den Rädern und somit dem Fahrzeug und der Fahrbahn dar. Dabei werden alle für das Fahren des Fahrzeuges aus dem Antreiben und Bremsen, aus der Richtungsänderung und aus der Spurhaltung resultierenden Kräfte über die Reifenaufstandsfläche zwischen dem Reifen und der Fahrbahn reibschlüssig übertragen. Die bei dieser Übertragung auftretende Kraft hängt zwar zunächst von den an sich bekannten Parametern, insbesondere der Reifen und des Fahrzeuges, ab, wesentlich wird jedoch diese Kraft aber auch von der jeweils wirkenden Radlast und dem Reibwert µ bestimmt, der in Abhängigkeit von der Witterung sowie vom Fahrbahnzustand einer kurzfristigen Änderung unterliegt.

Da im Wesentlichen die Profilelementverformung des Reifens und die Gleitbewegungen zwischen dem Gummi des Reifens und der Fahrbahn die Reibung bestimmen, die die Kraftübertragung vom Reifen auf die Straße sowohl in Längs- als auch in Querrichtung ermöglicht, ist es erforderlich, Aussagen über die übertragene Kraft aber auch über den Reibwert µ zu erhalten. Daher ist es allgemein bekannt, die Verformung einzelner Stollenelemente des Reifens zu messen. Ausgehend von der Kenntnis der elastischen Eigenschaften des Reifens beziehungsweise der Stollenelemente kann somit auf die von dem jeweiligen Stollenelement übertragene Kraft geschlossen werden. Gleichzeitig kann aber auch durch Beobachtung der Verformung eines Stollenelementes auf den Reibwert µ geschlossen werden, da während des Durchlaufs der jeweiligen Stollenelemente des Reifens über seine Radaufstandsfläche auf der Fahrbahn stets lokale Gleitvorgänge auftreten, die vom verfügbaren Kraftschlusspotential abhängen.

Um nun Aussagen über die übertragene Kraft und den Reibwert µ von Reifen für Fahrzeuge zu erhalten, kommen grundsätzlich Sensoren zur Anwendung. So kann beispielsweise die Verformung der Stollenelemente eines Reifens durch die Detektion der Bewegung eines hier eingebrachten Magneten mittels Hall-Sensoren gemessen werden. Gemäß der nach veröffentlichten Anmeldung DE 100 25 502 oder der Patentschrift EP 0 937 615 ist auch schon vorgeschlagen worden, Sensoren, die sowohl kapazitiv als auch induktiv sein können, zur Messung der Verformung des Profils des Reifens und damit der mechanischen Spannungen im Bereich der Reifenaufstandsfläche einzusetzen, indem eine Vielzahl von Sensoren auf der Lauffläche, so auch innerhalb der Profilelemente des Reifens angeordnet beziehungsweise eingebettet sind. Den Sensoren ist dabei eine Antenne zugeordnet, über die die gewonnenen Messgrößen als Signale einer Auswerteeinheit zugeführt werden. Da stets mehrere Sensoren im Aufnahmebereich der Antenne liegen, ist es erforderlich, die Sensoren zu codieren, um gezielte Informationen über die Verformung in der Reifenaufstandsfläche zu erhalten.

Es hat sich aber auch gezeigt, dass trotz der vielen bekannten Anordnungen von Sensoren, auch unter Berücksichtigung ihrer Ausbildung, eine Onlinemessung der interessierenden Größen hinsichtlich der übertragenen Kraft und des Reibwertes µ nicht möglich ist. Vielmehr muss sowohl zur Bestimmung der übertragenen Kraft als auch des Reibwertes µ der Reifen die Reifenaufstandsfläche erst verlassen haben, so dass anschließend beispielsweise die in Längsrichtung übertragene Kraft mit Hilfe des orientierten Flächeninhaltes unter der Kurve lokale Spannung im Stollenelement als Funktion des zurückgelegten Weges bestimmbar ist. Dabei kann aus der speziellen Kurvenform, den Spannungsextremen und der Steigung der Kurve beim Spannungsnulldurchgang im Reifengummi der Reibwert µ bestimmt werden. Erhebliche Schwierigkeiten ergeben sich jedoch trotzdem bei der Messung der übertragenen Kraft und des Reibwertes µ bei kleinen Geschwindigkeiten. Im Stillstand des Fahrzeuges sind diese Messungen überhaupt nicht möglich.

### Vorteile der Erfindung

Durch die Erfindung wird eine Reifensensorik zur kontinuierlichen Messung der übertragenen Kraft und des Reibwertpotentials µ geschaffen, durch die die dazu benötigten Messgrößen nicht nur bei relativ großen Geschwindigkeiten des rotierenden Reifens erfasst werden, sondern auch bei geringen Geschwindigkeiten, insbesondere aber auch im Stillstand des Reifens, wobei eine echtzeitfähige rauscharme Kraft- und µ-Wertmessung ermöglicht wird, ohne dass dabei eine Verkabelung der Sensoren erforderlich ist.

Diese Vorteile werden dadurch erreicht, dass im Bereich der äußeren Umfangsfläche des Reifens in jedem durch Unterteilung der Umfangsfläche gebildeten Sektor, der der Reifenaufstandsfläche entspricht, eine Vielzahl einzeln identifizierbarer Sensoren angeordnet ist, durch die mechanische Spannungen lokal in jeder Stellung des Reifens, so auch im Stillstand, messbar sind, so dass die augenblickliche Kraftverteilung im Reifen bestimmbar ist.

Ausgehend hiervon ist nicht nur bei einem rotierenden Reifen, sondern auch im Stillstand des Reifens beim lokalen Messen der mechanischen Spannungen, eine Kurve erzeugbar, die sich aus der Spannung als Funktion des Weges ergibt, und zwar aus so vielen Messpunkten, wie Sensoren in dem jeweiligen Sektor der äußeren Umfangsfläche des Reifens angeordnet sind, der der jeweiligen Reifenaufstandsfläche entspricht. Dabei wird an den einzelnen, aus der Anzahl der Sensoren resultierenden Stützpunkten eine Kurve angefittet, aus deren Parametern die übertragene Kraft und das Reibwertpotential µ berechenbar ist.

Damit wird durch die erfindungsgemäße Reifensensorik nicht nur bei allen Geschwindigkeiten des rotierenden Reifens, sondern auch im Stillstand des Reifens, eine kontinuierliche Messung sowohl der übertragenen Kraft als auch des Reibwertpotentials µ ermöglicht, so dass eine Ermittlung der übertragenen Kraft und des Reibwertpotentials µ mittels Beobachtung der Verformung eines einzelnen Stollenelements nach einem vollständigen Durchlauf des Stollenelements durch die Reifenaufstandsfläche entfällt. Somit werden aber auch bisher nicht immer vermeidbare Verfälschungen der Ergebnisse, die beispielsweise durch geringfügige lokale Unebenheiten in der Fahrbahn entstehen können, ausgeschaltet.

Gemäß einer bevorzugten Ausbildung der Erfindung sind bei einem Umfang des Reifens von etwa 2 m und einer Reifenaufstandsfläche, deren Länge 10 cm beträgt, 200 Sensoren an der äußeren Umfangsfläche des Reifens angeordnet, so dass jedem Sektor, der der Reifenaufstandsfläche entspricht, 10 Sensoren, also 10 als Messpunkte dienende Stützpunkte zum Anfitten einer Kurve zugeordnet sind. Das schließt natürlich nicht aus, dass die Anzahl der einem Sektor zugeordneten Sensoren, beispielsweise bei einer größeren Reifenaufstandsfläche, auch erhöht werden kann, um zu genaueren Ergebnissen bei der Messung der übertragenen Kraft und des Reibwertpotentials µ zu kommen. Andererseits kann die Anzahl der einem Sektor zugeordneten Sensoren aber auch verringert werden, was dann gegeben ist, wenn der Reifen einen relativ kleinen Umfang besitzt. Das Eintreten der durch die Erfindung beabsichtigten Wirkungen wird hierdurch nicht beeinflusst.

Nach einem weiteren Merkmal der Erfindung bestehen die Sensoren aus einem Material, dessen elektromagnetische Eigenschaften durch mechanische Spannungen veränderbar sind, so dass in Abhängigkeit dieser Spannungen die Hysteresekurve und somit die Dämpfung des Materials veränderbar ist. Obwohl als Material jedes Material einsetzbar ist, das dazu geeignet ist, durch mechanische Spannungen die elektromagnetischen Eigenschaften des Materials zu verändern, hat sich gezeigt, dass als Material für die Sensoren Girant-Stress-Impedance-Material bevorzugt dazu geeignet ist, um die beabsichtigte Veränderung der elektromagnetischen Eigenschaften zu erzielen.

Unter Berücksichtigung dieses Materials sollten die Sensoren vorteilhafter Weise aus Fäden bestehen, die bei Einwirkung von mechanischen Spannungen zu elektromagnetischen Schwingungen anregbar sind, derart, dass sie auf ihrer Eigenfrequenz weiterschwingen, die im Wesentlichen durch ihre Länge bestimmbar ist. Um bei dieser Ausbildung der Sensoren als Fäden eine Identifikation der einzelnen, einem jeden Sektor der äußeren Umfangsfläche des Reifens zugeordneten Sensoren zu ermöglichen, sind die einem jeden Sensor zugeordneten, als Fäden ausgebildeten Sensoren in ihrer Länge variiert, so dass über die daraus resultierenden, unterschiedlichen Frequenzen der Antwortfunktionen die Sensoren identifizierbar sind. Dabei besteht beispielsweise die Möglichkeit, die als Fäden ausgebildeten Sensoren innerhalb eines jeden Sektors der äußeren Umfangsfläche des Reifens so anzuordnen, dass die Länge der Fäden stetig ab- oder zunimmt, oder es kann auch eine derartige Anordnung vorgenommen werden, bei der wechselweise auf einen längeren Faden wieder ein kürzerer Faden folgt.

Damit auch nach der Übertragung der durch die Sensoren ermittelten Messgrößen durch die Antennenanordnung diese bei Abruf der Auswerteeinheit bereit gestellt werden können, ist der Empfangsantenne eine Speichereinheit nachgeordnet, die bei Anforderung die Messgrößen zur Verfügung stellt. Ist eine sofortige Bereitstellung der Messgrößen zweckmäßig, so kann die Speichereinheit auch entfallen, und die Empfangsantenne übermittelt nach Empfang der Signale die Messgrößen unmittelbar an die Auswerteeinheit.

Eine vorteilhafte Anordnung der Sendeantenne der Antennenanordnung wird durch ihre Anordnung in der Nähe der Achse des Reifens erreicht.

Kommt bei der erfindungsgemäß ausgebildeten Reifensensorik bei der Messung der übertragenen Kraft und des Reibwertpotentials µ Lichtleittechnik zur Anwendung, so besteht sowohl die Sende- als auch die Empfangsantenne der Antennenanordnung zweckmäßigerweise aus opto-elektrischen Umsetzern.

In Abhängigkeit von der Ausbildung der Antennenanordnung, insbesondere der Sendeantenne, weist diese eine Richtungscharakteristik nach Art einer Keule für das Senden von Signalen auf, die die an der äußeren Umfangsfläche des Reifens angeordneten Sensoren erfasst, die jeweils im Bereich der Reifenaufstandsfläche liegen.

Gleichzeitig kann durch die erfindungsgemäß ausgebildete und angeordnete Reifensensorik auch der Reifeninnendruck kontrolliert werden, indem der Einfederweg des Reifens und die Länge der Reifenaufstandsfläche messbar sind.

### Zeichnungen

Die Erfindung wird nachfolgend in einem Ausführungsbeispiel anhand der zugehörigen Zeichnungen näher erläutert. Es zeigen:
- Figur 1: eine Teilansicht eines Reifens eines Fahrzeuges bei seiner Auflage auf einer Fahrbahn mit einer dem Reifen zugeordneten Reifensensorik;
- Figur 2: eine Abwicklung des Reifens nach Figur 1 im Bereich seiner Reifenaufstandsfläche und
- Figur 3: ein Blockschaltbild der Reifensensorik nach Figur 1.

### Beschreibung des Ausführungsbeispiels

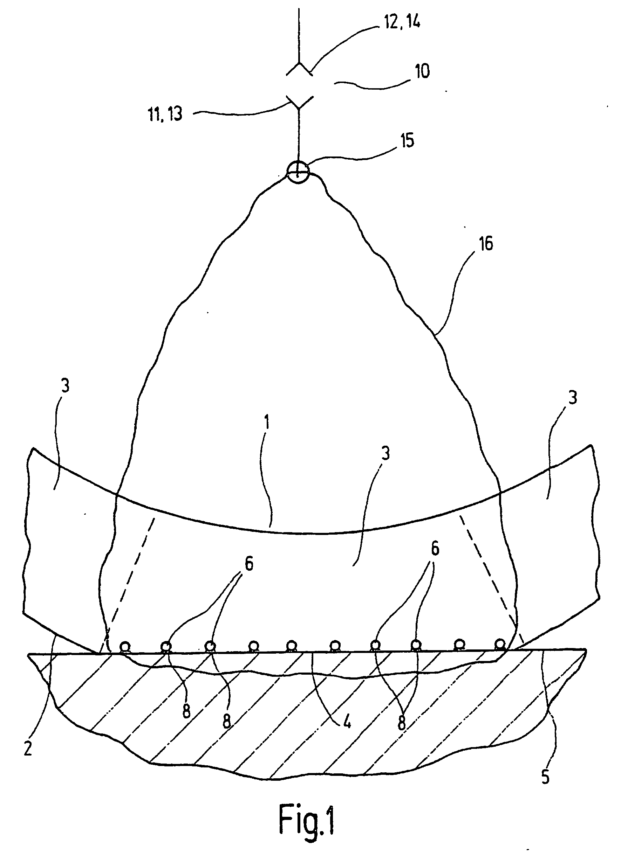

Gemäß Figur 1 ist der Reifen 1 eines Fahrzeuges im Bereich seiner äußeren Umfangsfläche 2 in Sektoren 3 unterteilt, wobei jeder Sektor 3 der Reifenaufstandsfläche 4 des Reifens 1 auf der Fahrbahn 5 entspricht. Wird von einem Reifen 1 mit einem Umfang von 2 m und von einer Reifenaufstandsfläche 4, deren Länge 10 cm beträgt, ausgegangen, so ergeben sich im Bereich der äußeren Umfangsfläche 2 des Reifens 1 zwanzig Sektoren 3.

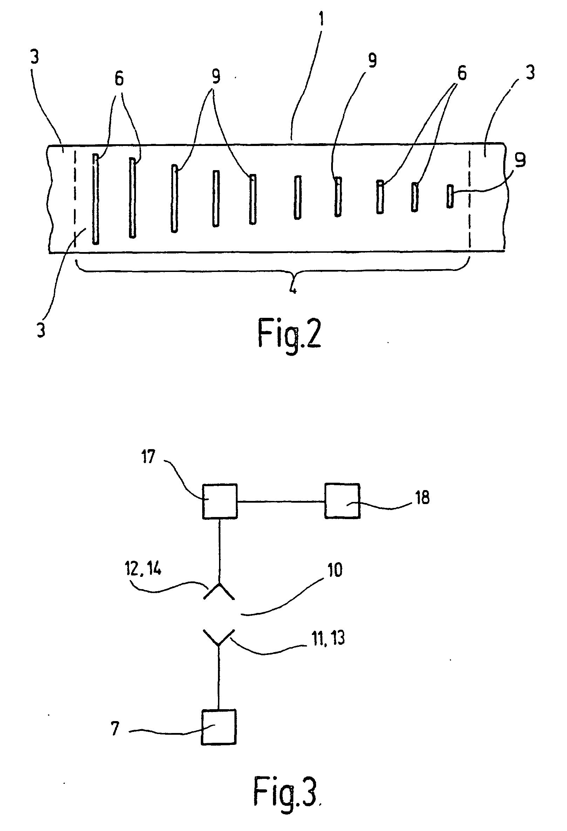

Um nun eine Aussage über die übertragene Kraft und das Reibwertpotential µ des Reifens 1 in jeder Stellung des Reifens 1, und zwar nicht nur bei großen oder kleinen Geschwindigkeiten des rotierenden Reifens 1, sondern auch bei seinem Stillstand, zu erhalten, sind im Bereich der äußeren Umfangsfläche 2 des Reifens 1 in jedem Sektor 3 zehn einzeln identifizierbare Sensoren 6 angeordnet, durch die mechanische Spannungen lokal messbar sind und die im Wesentlichen die Reifensensorik 7 (Figur 3) bilden. Ausgehend von der Anordnung von zehn Sensoren 6 in einem Sektor 3 ergeben sich somit zehn Messpunkte für das lokale Messen der mechanischen Spannungen, durch das eine Kurve angefittet wird, aus deren Parametern die übertragene Kraft und das Reibwertpotential µ berechnet werden kann.

Erreicht wird das, indem die Sensoren 6 aus einem Material bestehen, dessen elektromagnetische Eigenschaften durch mechanische Spannungen veränderbar sind, so dass in Abhängigkeit von diesen Spannungen die Hysteresekurve und somit die Dämpfung des Materials veränderbar ist. Dieses wird ermöglicht, indem die Sensoren 6 aus Girant-Stress-Impedance-Material bestehen. Das bedeutet, dass die Sensoren 6 bei Einwirkung von mechanischen Spannungen, die sich aus der Auflage des Reifens 1 über die Reifenaufstandsfläche 4 auf die Fahrbahn 5 ergeben, zu elektromagnetischen Schwingungen angeregt werden, die dann auf ihrer Eigenfrequenz weiterschwingen.

Um dabei unterschiedliche Frequenzen zu erhalten, was angestrebt wird, um durch die daraus resultierenden Antwortfunktionen eine Identifikation der einzelnen Sensoren 6 zu ermöglichen, sind diese, wie aus Figur 2 hervorgeht, als Fäden 9 unterschiedlicher Länge ausgebildet, wobei die Sensoren 6 innerhalb eines jeden Sektors 3 der äußeren Umfangsfläche 2 des Reifens 1 derart angeordnet sind, dass ihre Länge, also die der Fäden 9, stetig abnimmt.

Aus Figur 1 in Verbindung mit Figur 2 ist weiterhin ersichtlich, dass der im Wesentlichen aus den Sensoren 6 bestehenden Reifensensorik 7 eine Antennenanordnung 10 zugeordnet ist, die aus einer Sendeantenne 11 und aus einer Empfangsantenne 12 besteht, die aus opto-elektrischen Umsetzern 13, 14 bestehen können. Dabei ist gemäß Figur 1 die Sendeantenne 11 in der Nähe der Achse 15 des Reifens 1 angeordnet und besitzt eine Richtungscharakteristik 16 nach Art einer Keule für das Senden von Signalen, die die an der äußeren Umfangsfläche 2 des Reifens 1 angeordneten Sensoren 6 erfasst, die im Bereich der Reifenaufstandsfläche 4 liegen.

Aus Figur 3 ist aber auch ersichtlich, dass die durch die Sensoren 6 der Reifensensorik 7 ermittelten Messgrößen über die Antennenanordnung 10 einer Speichereinheit 17 zugeführt werden, die der Empfangsantenne 12 nachgeordnet ist. Bei Abruf können die ermittelten Messgrößen durch die Speichereinheit 17 der Auswerteeinheit 18 bereit gestellt werden.

## Patentansprüche

1. Reifensensorik zur kontinuierlichen Messung der übertragenen Kraft und des Reibwertpotentials µ, die aus einer Vielzahl von an der äußeren Umfangsfläche (2) des Reifens (1) angeordneten Sensoren (6) besteht, durch die Messgrößen abgegriffen und als Signale über eine Antennenanordnung (10) einer Auswerteeinheit (18) zuführbar sind, **dadurch gekennzeichnet, dass** im Bereich der äußeren Umfangsfläche (2) des Reifens (1) in jedem Sektor (3), der der Reifenaufstandsfläche (4) entspricht, eine Vielzahl einzeln identifizierbarer Sensoren (6) angeordnet ist, durch die mechanische Spannungen lokal in jeder Stellung des Reifens (1), so auch im Stillstand, messbar sind, so dass die augenblickliche Kraftverteilung im Reifen (1) bestimmbar ist.

2. Reifensensorik nach Anspruch 1, **dadurch gekennzeichnet, dass** beim lokalen Messen der mechanischen Spannungen eine Kurve erzeugbar ist, die sich aus der Spannung als Funktion des Weges ergibt, und zwar aus so vielen Messpunkten, wie Sensoren (6) in dem Sektor (3) des Reifens (1) angeordnet sind, der der jeweiligen Reifenaufstandsfläche (4) entspricht.

3. Reifensensorik nach Anspruch 2, **dadurch gekennzeichnet, dass** an den einzelnen, aus der Anzahl der Sensoren (6) resultierenden Stützpunkten (8) eine Kurve angefittet ist, aus deren Parametern die übertragene Kraft und das Reibwertpotential µ berechenbar ist.

4. Reifensensorik nach Anspruch 3, **dadurch gekennzeichnet, dass** bei einem Umfang des Reifens (1) von etwa 2 m und einer Reifenaufstandsfläche (4), deren Länge 10 cm beträgt, 200 Sensoren (6) an der äußeren Umfangsfläche (2) des Reifens (1) angeordnet sind, so dass jedem Sektor (3), der der Reifenaufstandsfläche (4) entspricht, zehn Sensoren (6), also zehn als Messpunkte dienende Stützpunkte (8), zum Anfitten einer Kurve zugeordnet sind.

5. Reifensensorik nach einem oder mehreren der Ansprüche 1 bis 4, **dadurch gekennzeichnet, dass** die Sensoren (6) aus einem Material bestehen, dessen elektromagnetische Eigenschaften durch mechanische Spannungen veränderbar sind, so dass in Abhängigkeit dieser Spannungen die Hysteresekurve und somit die Dämpfung des Materials veränderbar ist.

6. Reifensensorik nach Anspruch 5, **dadurch gekennzeichnet, dass** als Material für die Sensoren (6) Girant-Stress-Impedance-Material vorgesehen ist.

7. Reifensensorik nach Anspruch 6, **dadurch gekennzeichnet, dass** die Sensoren (6) aus Fäden (9) bestehen, die bei Einwirkung von mechanischen Spannungen zu elektromagnetischen Schwingungen anregbar sind, derart, dass sie auf ihrer Eigenfrequenz weiterschwingen, die im Wesentlichen durch ihre Länge bestimmbar ist.

8. Reifensensorik nach Anspruch 7, **dadurch gekennzeichnet, dass** die einem jeden Sektor (3) der äußeren Umfangsfläche (2) des Reifens (1) zugeordneten, als Fäden (9) ausgebildeten Sensoren (6) in ihrer Länge variiert sind, so dass über die daraus resultierenden, unterschiedlichen Frequenzen der Antwortfunktionen die einzelnen Sensoren (6) identifizierbar sind.

9. Reifensensorik nach Anspruch 8, **dadurch gekennzeichnet, dass** die durch die Sensoren (6) ermittelten Messgrößen bei ihrer Übertragung durch die Antennenanordnung (10) einer der Empfangsantenne (12) nachgeordneten Speichereinheit (17) zuführbar sind, die die Messgrößen der Auswerteeinheit (18) bei Abruf bereit stellt.

10. Reifensensorik nach Anspruch 9, **dadurch gekennzeichnet, dass** die Sendeantenne (11) der Antennenanordnung (10) in der Nähe der Achse (15) des Reifens (1) angeordnet ist.

11. Reifensensorik nach Anspruch 10, **dadurch gekennzeichnet, dass** sowohl die Sende- als auch die Empfangsantenne (11, 12) der Antennenanordnung (10) aus opto-elektrischen Umsetzern (13, 14) besteht.

12. Reifensensorik nach Anspruch 11, **dadurch gekennzeichnet, dass** die Sendeantenne (11) eine Richtungscharakteristik (16) vorzugsweise nach Art eine Keule für das Senden von Signalen aufweist, die die an der äußeren Umfangsfläche (2) des Reifens (1) angeordneten Sensoren (6) erfasst, die jeweils im Bereich der Reifenaufstandsfläche (4) liegen.

13. Reifensensorik nach einem oder mehreren der Ansprüche 1 bis 12, **dadurch gekennzeichnet, dass** gleichzeitig durch die Reifensensorik (7) zur Kontrolle des Reifeninnendruckes der Einfederweg des Reifens (1) und die Länge der Reifenaufstandsfläche (4) messbar ist.

## Claims

1. Tyre sensor system for continuously measuring the transmitted force and the coefficient of friction potential µ, which is composed of a plurality of sensors (6) arranged on the outer circumferential face (2) of the tyre (1), which taps measurement variables and feeds them as signals to an evaluation unit (18) via an antenna array (10), **characterized in that** a plurality of individually identifiable sensors (6) are arranged in the region of the outer circumferential face (2) of the tyre (1), in each sector (3) which corresponds to the tyre contact face (4), which sensors (6) can measure the mechanical stresses locally in any position of the tyre (1), even within the stationary state, so that the instantaneous distribution of force in the tyre (1) can be determined.

2. Tyre sensor system according to Claim 1, **characterized in that**, during the local measurement of the mechanical stresses, it is possible to generate a curve which results from the voltage as a function of the travel, specifically from as many measuring points as there are sensors (6) arranged in the sector (3) of the tyre (1) which corresponds to the respective tyre contact face (4).

3. Tyre sensor system according to Claim 2, **characterized in that** a curve is fitted onto the individual reference points (8) resulting from the number of sensors (6), and the transmitted force and the coefficient friction potential µ can be calculated from the parameters of said curve.

4. Tyre sensor system according to Claim 3, **characterized in that** given a circumference of the tyre (1) of approximately 2m and a tyre contact face (4) whose length is 10 cm, 200 sensors (6) are arranged on the outer circumferential face (2) of the tyre (1) so that each sector (3), which corresponds to the tyre contact face (4), is assigned ten sensors (6) that is to say ten reference points (8) serving as measuring points, for fitting on a curve.

5. Tyre sensor system according to one or more of Claims 1 to 4, **characterized in that** the sensors (6) are composed of a material whose electromagnetic properties can be varied by mechanical stresses so that the hysteresis curve and thus the damping of the material can be varied as a function of these stresses.

6. Tyre sensor system according to Claim 5, **characterized in that** girant stress impedance material is provided as the material for the sensors (6).

7. Tyre sensor system according to Claim 6, **characterized in that** the sensors (6) are composed of threads (9) which can be excited under the effect of mechanical stresses to undergo electromagnetic oscillations in such a way that they continue to oscillate at their natural frequency which can be tuned essentially by their length.

8. Tyre sensor system according to Claim 7, **characterized in that** the sensors (6) which are assigned to each sector (3) of the outer circumferential face (2) of the tyre (1) and are embodied as threads (9) are varied in their length so that the individual sensors (6) can be identified by means of the resulting, different frequencies of the response functions.

9. Tyre sensor system according to Claim 8, **characterized in that** during their transmission by the antenna array (10) the measuring variables which are determined by the sensors (6) can be fed to a memory unit (17) which is arranged downstream of the receiver antenna (12) and which makes available the measuring variables to the evaluation unit (18) when they are called.

10. Tyre sensor system according to Claim 9, **characterized in that** the transmitter antenna (11) of the antenna array (10) is arranged in the vicinity of the axis (15) of the tyre (1).

11. Tyre sensor system according to Claim 10, **characterized in that** both the transmitter antenna (11) and the receiver antenna (12) of the antenna array (10) are composed of opto-electrical converters (13, 14).

12. Tyre sensor system according to Claim 11, **characterized in that** the transmitter array (11) has a directional characteristic (16), preferably in the manner of a lobe for transmitting signals, which is sensed by the sensors (6) which are arranged on the outer circumferential face (2) of the tyre (1) and which are each located in the region of the tyre contact face (4).

13. Tyre sensor system according to one or more of Claims 1 to 12, **characterized in that** the spring compression travel of the tyre (1) and the length of the tyre contact face (4) can be measured simultaneously by the tyre sensor system (7) in order to monitor the internal pressure of the tyre.

## Revendications

1. Système de détection permettant de mesurer en continu la force transmise et le potentiel du coefficient de frottement µ qui se compose d'un grand nombre de capteurs (6) disposés sur la surface périphérique extérieure (2) du pneu (1), permettant de détecter les grandeurs de mesure et pouvant être amenés en tant que signaux à une unité d'exploitation (18) via un dispositif d'antennes (10),
**caractérisé en ce que**
dans la zone de la surface périphérique extérieure (2) du pneu (1), dans chaque secteur (3) correspondant à la surface d'appui (4) du pneu, un grand nombre de capteurs (6) identifiables individuellement et permettant de mesurer localement les tensions mécaniques dans chaque position du pneu (1), même à l'arrêt, sont placés de manière à pouvoir définir la répartition momentanée des forces dans le pneu (1).

2. Système de détection selon la revendication 1,
**caractérisé en ce que**
pour la mesure locale des tensions mécaniques, il est possible de générer une courbe qui résulte de la tension en tant que fonction du parcours et plus précisément d'autant de points de mesure qu'il y a de capteurs (6) dans le secteur (3) du pneu (1) qui correspond à chaque surface d'appui (4) du pneu.

3. Système de détection selon la revendication 2,
**caractérisé en ce qu'**
une courbe dont les paramètres permettent de calculer la force transmise et le potentiel du coefficient de frottement µ est ajustée aux différents points d'appui (8) résultant de la grande diversité de capteurs (6).

4. Système de détection selon la revendication 3,
**caractérisé en ce que**
pour une périphérie de pneu (1) d'environ 2 m et une surface d'appui de pneu (4) de 10 cm de long, 200 capteurs (6) sont disposés sur la surface périphérique extérieure (2) du pneu (1) de sorte que dix capteurs (6), c'est-à-dire dix points d'appui (8) servant de points de mesure, sont associés à chaque capteur (3) correspondant à la surface d'appui du pneu (4) pour l'ajustage d'une courbe.

5. Système de détection selon l'une quelconque des revendications 1 à 4,
**caractérisé en ce que**
les capteurs (6) se composent d'un matériau dont les propriétés électromagnétiques peuvent être modifiées par des tensions mécaniques de sorte qu'en fonction de ces tensions la courbe d'hystérèse et donc l'amortissement du matériau peuvent être modifiées.

6. Système de détection selon la revendication 5,
**caractérisé en ce que**
le matériau pour les capteurs (6) est un matériau à impédance variable sous contrainte (Girant-Stress-Impedance).

7. Système de détection selon la revendication 6,
**caractérisé en ce que**
les capteurs (6) sont composés de fils (9) qui peuvent être excités en oscillations électromagnétiques lors de l'action de tensions mécaniques, de sorte qu'ils continuent à osciller à leur propre fréquence qui peut être essentiellement définie par leur longueur.

8. Système de détection selon la revendication 7,
**caractérisé en ce que**
la longueur des capteurs (6) formés en tant que fils (9) et associés à chaque secteur (3) de la surface périphérique extérieure (2) du pneu (1) varie pour que les différents capteurs (6) puissent être identifiés sur les différentes fréquences résultantes.

9. Système de détection selon la revendication 8,
**caractérisé en ce que**
lors de leur transmission par le dispositif d'antennes (10), les grandeurs de mesure déterminées par les capteurs (6) peuvent être amenées à une unité de mémoire (17) disposée après l'antenne de réception (12) et préparant sur demande les grandeurs de mesure de l'unité d'exploitation (18).

10. Système de détection selon la revendication 9,
**caractérisé en ce que**
l'antenne émettrice (11) du dispositif d'antennes (10) est disposée à proximité de l'axe (15) du pneu (1).

11. Système de détection selon la revendication 10,
**caractérisé en ce que**
l'antenne émettrice, tout comme l'antenne réceptrice (11, 12) du dispositif d'antennes (10), se compose de convertisseurs optoélectriques (13, 14).

12. Système de détection selon la revendication 11,
**caractérisé en ce que**
l'antenne émettrice (11) présente pour l'émission de signaux, une caractéristique de direction (16), de préférence de type lobe, qui comprend les capteurs (6) disposés sur la surface périphérique extérieure (2) du pneu (1) et se trouvant respectivement dans la zone de la surface d'appui du pneu (4).

13. Système de détection selon l'une quelconque ou plusieurs des revendications 1 à 12,
**caractérisé en ce que**
le chemin élastique du pneu (1) et la longueur de la surface d'appui du pneu (4) peuvent être mesurés simultanément par le système de détection (7) pour le contrôle de la pression intérieure du pneu.
